# EUROPEAN PATENT APPLICATION

(11) **EP 4 592 104 A1**
(43) Date of publication of application: **30.07.2025**
(21) Application number: 24153717.4
(22) Date of filing: 24.01.2024
(51) Int. Cl.: B60H 1/00, B60H 1/14

(54) **METHOD FOR CONTROLLING A THERMAL MANAGEMENT SYSTEM OF AN ELECTRIC VEHICLE, DATA PROCESSING APPARATUS, COMPUTER PROGRAM, COMPUTER-READABLE STORAGE MEDIUM, AND USES**

(71) Applicant: Volvo Car Corporation, 405 31 Göteborg (SE)
(72) Inventor: HERMANSON, Jesper, 40531 Göteborg (SE)
(74) Representative: Maiwald GmbH

(57) **Abstract**

The thermal management system (30) comprises a cabin air conditioning system (22) configured to control a temperature in a passenger cabin (24) of the electric vehicle and a traction battery thermal management system (16) configured to control a temperature of a traction battery (12) of the electric vehicle. The method comprises causing a heat transfer (H) from the cabin air conditioning system (22) to the traction battery thermal management system (16). Additionally, a data processing apparatus (32), a computer program (40), and a computer-readable storage medium (38) are described. Moreover, a use of a traction battery (12) of an electric vehicle as a heat sink for a cabin air conditioning system (22) and a use of a heat exchanger (20) forming part of a traction battery thermal management system (16) of an electric vehicle for cooling a passenger cabin (24) of the electric vehicle are presented.

## Description

The present disclosure relates to a method for controlling a thermal management system of an electric vehicle. The thermal management system comprises a cabin air conditioning system configured to control a temperature in a passenger cabin of the electric vehicle, and a traction battery thermal management system configured to control a temperature of a traction battery of the electric vehicle.

Additionally, the present disclosure is directed to a data processing apparatus, a computer program, and a computer-readable storage medium.

Furthermore, the present disclosure relates to a use of a traction battery of an electric vehicle and a use of a heat exchanger forming part of a traction battery thermal management system of an electric vehicle.

In this context, a cabin air conditioning system is used in order to have the temperature in the passenger cabin of the electric vehicle in a range that is comfortable or at least acceptable for the passengers. This means that the cabin air conditioning system is configured to cool the passenger cabin if the electric vehicle is used in a comparatively warm environment. Moreover, the cabin air conditioning system is configured to heat the passenger cabin if the electric vehicle is used in a comparatively cold environment.

The traction battery thermal management system is used in order to keep the temperature of the traction battery within a range that allows for efficient and reliable operation of the traction battery. In this context, a reliable operation of the traction battery includes ensuring a comparatively long service life of the traction battery. This means that the traction battery is kept within a certain temperature range in order to enhance service life of the traction battery or, at least, to make sure that the traction battery reaches a predefined target service life.

Modifying and keeping a desired temperature level in the passenger cabin and in the traction battery requires a certain amount of energy which in an electric vehicle usually is provided by the traction battery. Consequently, energy used by the cabin air conditioning system and/or the traction battery thermal management system may not be used for propelling the electric vehicle. This means that an energy efficient operation of the cabin air conditioning system and/or the traction battery thermal management system may lead to an increased driving range of the electric vehicle. This is generally desirable.

Therefore, it is an objective of the present disclosure to further enhance the energy efficiency of a thermal management system comprising a cabin air conditioning system and a traction battery thermal management system.

The problem is at least partially solved or alleviated by the subject matter of the independent claims of the present disclosure, wherein further examples are incorporated in the dependent claims.

According to a first aspect, there is provided a method for controlling a thermal management system of an electric vehicle. The thermal management system comprises a cabin air conditioning system configured to control a temperature in a passenger cabin of the electric vehicle, and a traction battery thermal management system configured to control a temperature of a traction battery of the electric vehicle. The method comprises causing a heat transfer from the cabin air conditioning system to the traction battery thermal management system. On a component-level this implies, that the cabin air conditioning system and the traction battery thermal management system are at least coupled to an extent that makes such a heat transfer possible. Such a heat transfer is especially useful in an operational situation in which the passenger cabin is to be cooled by the cabin air conditioning system, i.e. in an operational situation in which heat needs to be withdrawn from the passenger cabin. By transferring heat from the cabin air conditioning system to the traction battery thermal management system, both the cabin air conditioning system and the traction battery thermal management system may be used conjointly or synergistically in order to perform the task of cooling the passenger cabin. In other words, the traction battery thermal management system may support the cabin air conditioning system in cooling the passenger cabin. In doing so, a cooling capacity provided by the cabin air conditioning system may be situationally enlarged by such a heat transfer and use of the traction battery thermal management system. This means that a cooling performance of the cabin air conditioning system may be enlarged without the need to do hardware-changes in the cabin air conditioning system. Moreover, the heat transfer from the cabin air conditioning system into the traction battery thermal management system may enhance efficiency of cooling the passenger cabin. This may even be true in a situation in which a cooling capacity of the cabin air conditioning system alone would be sufficient for cooling the passenger cabin in a desired manner. This is due to the fact that an efficiency of the cabin air conditioning system may be different at different operational points associated with different levels of cooling performance. Here, it has been observed that an efficiency especially decreases if the cabin air conditioning system needs to provide a comparatively high level of cooling performance. Thus, if heat is transferred to the traction battery thermal management system, the cabin air conditioning system may be operated at a lower or comparatively low performance level. This enhances the overall efficiency of the thermal management system of an electric vehicle.

In an example, the traction battery thermal management system may additionally be configured to control a temperature of one or more other components of the electric drivetrain comprising the traction battery, e.g. an electric machine or a control unit of the electric drivetrain.

In an example, causing the heat transfer from the cabin air conditioning system to the traction battery thermal management system comprises selectively causing thermal coupling of the cabin air conditioning system and the traction battery thermal management system. This means that the thermal coupling of the cabin air conditioning system and the traction battery thermal management system may be controlled, i.e. the presence or absence of such a thermal coupling and/or at least the extent of the thermal coupling may be controlled. Thus, heat is not always transferred from the cabin air conditioning system to the traction battery thermal system, but just in cases in which such a heat transfer is desired. This allows to selectively enhance the cooling capacity for the passenger cabin and/or to selectively enhance operational efficiency of the thermal management system of the electric vehicle. However, in cases in which the absence of a heat transfer between the cabin air conditioning system and the traction battery thermal system is advantageous, thermal coupling of the cabin air conditioning system and the traction battery thermal management system may be interrupted. Altogether, overall efficiency of the thermal management system of the electric vehicle is enhanced.

According to an example, the cabin air conditioning system and the traction battery thermal management system may be thermally coupled using a heat exchanger. This is a simple and reliable way to allow for thermal coupling of the cabin air conditioning system at the traction battery thermal management system.

According to an example, causing the heat transfer from the cabin air conditioning system to the traction battery thermal management system comprises selectively causing opening of a coolant flow path within the cabin air conditioning system extending through a heat exchanger. The heat exchanger thermally couples the cabin air conditioning system and the traction battery thermal management system. Additionally or alternatively, causing the heat transfer from the cabin air conditioning system to the traction battery thermal management system comprises selectively causing opening of a coolant flow path within the traction battery thermal management system extending through a heat exchanger. The heat exchanger thermally couples the cabin air conditioning system and the traction battery thermal management system. The selective opening of the coolant flow paths may be done by operating one or more valves accordingly. Selectively causing opening of a coolant flow path in order to establish a heat transfer between the cabin air conditioning system and the traction battery thermal management system is a comparatively simple and precise manner to control the heat transfer between the cabin air conditioning system and the traction battery thermal management system. Moreover, this allows to establish or eliminate the heat transfer within a comparatively short time span.

It is noted that in the context of the present disclosure, the term coolant is to be understood in its most general form. Thus, a coolant describes any fluid, i.e. gas or liquid, that is used in order to transfer heat. In an example, the coolant is a liquid. In this context, the coolant may have a constant state of aggregation while performing the heat transfer. In such a case, the coolant may be water or may comprise water. Alternatively, the coolant may change its state of aggregation while performing the heat transfer. In this case, the coolant may as well be described as a refrigerant. In an example, the refrigerant comprises R134 or CO2.

In an example, causing the heat transfer from the cabin air conditioning system to the traction battery thermal management system comprises selectively causing opening of a coolant flow path within the traction battery thermal management system. The coolant flow path extends through the traction battery or arranged adjacent to the traction battery. Consequently, heat may be transferred into the traction battery. Stated otherwise, heat from the coolant traveling along the coolant flow path may be dissipated in the traction battery. This heat may originate from the cabin air conditioning system. Thus, the traction battery acts as a heat sink, more precisely as a heat sink for heat originating from the cabin air conditioning system and, thus, the passenger cabin. Consequently, the heat originating from the passenger cabin and provided by the cabin air conditioning system is not wasted but further used within the electric vehicle. This enhances overall efficiency.

According to an example, causing the heat transfer from the cabin air conditioning system to the traction battery thermal management system comprises selectively causing fluidic coupling of the cabin air conditioning system and the traction battery thermal management system. Thus, in this example, a coolant is effectively transferred from the cabin air conditioning system to the traction battery thermal management system. This means that a coolant having taken up heat in the cabin air conditioning system is transferred to the traction battery thermal management system and dissipates the heat within the traction battery thermal management system. Optionally, it is possible that this coolant circulates back from the traction battery thermal management system into the cabin air conditioning system after having dissipated at least a portion of the heat. Fluidic coupling of the cabin air conditioning system and the traction battery thermal management system is a direct and efficient way to transfer heat from the cabin air conditioning system into the traction battery thermal management system.

In an example, the method further comprises obtaining first data indicative of an operational condition of the cabin air conditioning system. Moreover, the method comprises causing the heat transfer from the cabin air conditioning system to the traction battery thermal management system if the first data exceeds a first data threshold indicative of an operational condition limit. It is noted that the term "first" has been chosen for the ease of explanation and does not imply any number. Thus, the term "first data" is rather to be considered as a name. In this example, the heat is only transferred from the cabin air conditioning system to the traction battery thermal management system if the first data exceeds the first data threshold, i.e. if the cabin air conditioning system is in an operational condition that exceeds an operational condition limit. The operational condition limit may correspond to a predefined percentage of a maximum performance, e.g. 80% to 100% of the maximum performance. In doing so, the heat transfer from the cabin air conditioning system to the traction battery thermal management system may be established only under operational conditions of the cabin air conditioning system in which such a heat transfer is useful in order to enhance cooling performance and/or in order to enhance efficiency. This further enhances the overall efficiency of the thermal management system of an electric vehicle.

In an example, the operational condition may be described by an operational parameter. The operational parameter may be indicative of one or more of a user setting of the cabin air conditioning system, a coolant temperature of a coolant of the cabin air conditioning system, a temperature difference measured within the cabin air conditioning system, a pressure measured within the cabin air conditioning system, a pressure difference measured within the cabin air conditioning system, a rotational speed of a pumping device, such as a pump or a compressor, of the cabin air conditioning system, and a rotational speed of a ventilation device, e.g. a fan, of the cabin air conditioning system. The operational condition limit may be described by corresponding threshold parameters.

In an example, the method further comprises obtaining second data indicative of a temperature of the passenger cabin and obtaining third data indicative of a temperature of the traction battery. Furthermore, the method comprises causing the heat transfer from the cabin air conditioning system to the traction battery thermal management system if the second data and third data indicate that the temperature of the traction battery is lower than the temperature of the passenger cabin. In other words, the condition relates to the fact that the third data indicate a temperature lower than the temperature as indicated by the second data. It is noted that the terms "second" and "third" have been chosen for the ease of explanation and do not imply any number. Thus, the terms "second data" and "third data" are rather to be considered as names. If a temperature of the traction battery is lower than the temperature of the passenger cabin, it is particularly easy to transfer heat from the passenger cabin, i.e. from the cabin air conditioning system, to the traction battery, i.e. to the traction battery terminal management system. In such a situation, the heat transfer may be done in a particularly efficient manner. Additionally, a situation in which the temperature of the traction battery is lower than the temperature of the passenger cabin may be considered as indicative of a situation in which the temperature of the traction battery is below a desired operational temperature or within a desired range of the temperature of the traction battery, but with that certain margin to an upper end of this desired range. Altogether, in such a situation, further heating of the traction battery is advantageous or at least not harmful.

It is noted that it is also possible to cause a heat transfer from the cabin air conditioning system to the traction battery thermal management system if the second data and third data indicate that the temperature of the traction battery is higher than the temperature of the passenger cabin. In other words, the heat transfer may also be caused if the third data indicate a temperature higher than the temperature as indicated by the second data. As before, the terms "second" and "third" have been chosen for the ease of explanation and do not imply any number. Thus, the terms "second data" and "third data" are rather to be considered as names. In case a temperature of the traction battery is higher than the temperature of the passenger cabin, a heat pumping effect needs to be used in order to be able to transfer heat from the passenger cabin, i.e. from the cabin air conditioning system, to the traction battery, i.e. to the traction battery terminal management system. In this case, use of a refrigerant is advantageous.

According to an example, the method further comprises causing a heat transfer from the traction battery thermal management system to an environment of the electric vehicle. Thus, in this example, heat may be transferred from the cabin air conditioning system to the traction battery thermal management system and from the traction battery thermal management system to the environment of the electric vehicle. This allows to have heat transferred from the cabin air conditioning system and, thus, from the passenger cabin, into the traction battery thermal management system even in a situation in which the traction battery thermal management system as such is not able to provide an appropriate heat sink. Thus, a cooling capacity of the cabin air conditioning system may be further enhanced. In the same manner, an efficiency of the combination of the cabin air conditioning system and the traction battery thermal management system may be improved.

In an example, causing the heat transfer from the traction battery thermal management system to the environment comprises selectively causing thermal coupling of the traction battery thermal management system and the environment. This means that the thermal coupling of traction battery thermal management system and the environment may be controlled, i.e. the presence or absence of such a thermal coupling and/or at least the extent of the thermal coupling may be controlled. Thus, heat is not always transferred from the traction battery thermal system to the environment, but just in cases in which such a heat transfer is desired. This allows to selectively enhance the cooling capacity for the passenger cabin and/or to selectively enhance operational efficiency of the thermal management system of the electric vehicle. However, in cases in which the absence of a heat transfer between the traction battery thermal system and the environment is advantageous, thermal coupling of the traction battery thermal management system and the environment may be interrupted. Altogether, overall efficiency of the thermal management system of the electric vehicle is enhanced.

According to an example, the traction battery thermal management system and the environment may be thermally coupled using a heat exchanger, e.g. a liquid-to-gas heat exchanger or a gas-to-gas heat exchanger. Such heat exchangers sometimes are called radiators. The environment essentially comprises air, i.e. the environment is always gaseous. The coolant may be liquid or gaseous. It is also possible that a portion of the coolant is liquid and another portion is gaseous. This is a simple and reliable way to allow for thermal coupling of the traction battery thermal management system and the environment.

In an example, causing the heat transfer from the traction battery thermal management system to the environment comprises selectively causing opening of a coolant flow path within the traction battery thermal management system extending through a heat exchanger. The heat exchanger thermally couples the traction battery thermal management system and the environment. As has been mentioned before, such heat exchanger may be configured as a liquid-to-gas heat exchanger which sometimes is called a radiator. The selective opening of the coolant flow path may be done by operating one or more valves accordingly. Selectively causing opening of a coolant flow path in order to establish a heat transfer between the traction battery thermal management system and the environment is a comparatively simple and precise way to control the heat transfer between the traction battery thermal management system and the environment. Moreover, this allows to establish or eliminate the heat transfer within a comparatively short time span.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect of the present disclosure, there is provided a data processing apparatus comprising means for carrying out the method of the present disclosure. As has been mentioned before, a heat transfer according to the method of the present disclosure is especially useful in an operational situation in which the passenger cabin is to be cooled by the cabin air conditioning system, i.e. in an operational situation in which heat needs to be withdrawn from the passenger cabin. By transferring heat from the cabin air conditioning system to the traction battery thermal management system, both the cabin air conditioning system and the traction battery thermal management system may be used conjointly or synergistically in order to perform the task of cooling the passenger cabin. In other words, the traction battery thermal management system may support the cabin air conditioning system in cooling the passenger cabin. In doing so, a cooling capacity provided by the cabin air conditioning system may be situationally enlarged by such a heat transfer and the traction battery thermal management system. This means that a cooling performance of the cabin air conditioning system may be enlarged without the need to do hardware-changes in the cabin air conditioning system. Moreover, the heat transfer from the cabin air conditioning system into the traction battery thermal management system may enhance efficiency of cooling the passenger cabin. This may even be true in a situation in which a cooling capacity of the cabin air conditioning system alone would be sufficient for cooling the passenger cabin in a desired manner. This is due to the fact that an efficiency of the cabin air conditioning system may be different at different operational points associated with different levels of cooling performance. Here, it has been observed that an efficiency especially decreases if the cabin air conditioning system needs to provide a comparatively high level of cooling performance. Thus, if heat is transferred to the traction battery thermal management system, the cabin air conditioning system may be operated at a lower or comparatively low performance level. This enhances the overall efficiency of the thermal management system of an electric vehicle.

According to a third aspect of the present disclosure, there is provided a computer program comprising instructions which, when the computer program is executed by a computer, cause the computer to carry out the method of the present disclosure. As has been mentioned before, a heat transfer according to the method of the present disclosure is especially useful in an operational situation in which the passenger cabin is to be cooled by the cabin air conditioning system, i.e. in an operational situation in which heat needs to be withdrawn from the passenger cabin. By transferring heat from the cabin air conditioning system to the traction battery thermal management system, both the cabin air conditioning system and the traction battery thermal management system may be used conjointly or synergistically in order to perform the task of cooling the passenger cabin. In other words, the traction battery thermal management system may support the cabin air conditioning system in cooling the passenger cabin. In doing so, a cooling capacity provided by the cabin air conditioning system may be situationally enlarged by such a heat transfer and the traction battery thermal management system. This means that a cooling performance of the cabin air conditioning system may be enlarged without the need to do hardware-changes in the cabin air conditioning system. Moreover, the heat transfer from the cabin air conditioning system into the traction battery thermal management system may enhance efficiency of cooling the passenger cabin. This may even be true in a situation in which a cooling capacity of the cabin air conditioning system alone would be sufficient for cooling the passenger cabin in a desired manner. This is due to the fact that an efficiency of the cabin air conditioning system may be different at different operational points associated with different levels of cooling performance. Here, it has been observed that an efficiency especially decreases if the cabin air conditioning system needs to provide a comparatively high level of cooling performance. Thus, if heat is transferred to the traction battery thermal management system, the cabin air conditioning system may be operated at a lower or comparatively low performance level. This enhances the overall efficiency of the thermal management system of an electric vehicle.

According to a fourth aspect of the present disclosure, there is provided a computer-readable storage medium comprising instructions which, when executed by a computer, cause the computer to carry out the method of the present disclosure. As has been mentioned before, a heat transfer according to the method of the present disclosure is especially useful in an operational situation in which the passenger cabin is to be cooled by the cabin air conditioning system, i.e. in an operational situation in which heat needs to be withdrawn from the passenger cabin. By transferring heat from the cabin air conditioning system to the traction battery thermal management system, both the cabin air conditioning system and the traction battery thermal management system may be used conjointly or synergistically in order to perform the task of cooling the passenger cabin. In other words, the traction battery thermal management system may support the cabin air conditioning system in cooling the passenger cabin. In doing so, a cooling capacity provided by the cabin air conditioning system may be situationally enlarged by such a heat transfer and the traction battery thermal management system. This means that a cooling performance of the cabin air conditioning system may be enlarged without the need to do hardware-changes in the cabin air conditioning system. Moreover, the heat transfer from the cabin air conditioning system into the traction battery thermal management system may enhance efficiency of cooling the passenger cabin. This may even be true in a situation in which a cooling capacity of the cabin air conditioning system alone would be sufficient for cooling the passenger cabin in a desired manner. This is due to the fact that an efficiency of the cabin air conditioning system may be different at different operational points associated with different levels of cooling performance. Here, it has been observed that an efficiency especially decreases if the cabin air conditioning system needs to provide a comparatively high level of cooling performance. Thus, if heat is transferred to the traction battery thermal management system, the cabin air conditioning system may be operated at a lower or comparatively low performance level. This enhances the overall efficiency of the thermal management system of an electric vehicle.

According to a fifth aspect of the present disclosure, there is provided a use of a traction battery of an electric vehicle as a heat sink for a cabin air conditioning system. Thus, heat which is to be removed or withdrawn from the cabin air conditioning system, and thus the passenger cabin, may be transferred to the traction battery. Stated otherwise, heat from the cabin air conditioning system may be dissipated in the traction battery. As has been mentioned before, a heat transfer according to the method of the present disclosure is especially useful in an operational situation in which the passenger cabin is to be cooled by the cabin air conditioning system, i.e. in an operational situation in which heat needs to be withdrawn from the passenger cabin. By transferring heat from the cabin air conditioning system to the traction battery thermal management system, both the cabin air conditioning system and the traction battery thermal management system may be used conjointly or synergistically in order to perform the task of cooling the passenger cabin. In other words, the traction battery thermal management system may support the cabin air conditioning system in cooling the passenger cabin. In doing so, a cooling capacity provided by the cabin air conditioning system may be situationally enlarged by such a heat transfer and the traction battery thermal management system. This means that a cooling performance of the cabin air conditioning system may be enlarged without the need to do hardware-changes in the cabin air conditioning system. Moreover, the heat transfer from the cabin air conditioning system into the traction battery thermal management system may enhance efficiency of cooling the passenger cabin. This may even be true in a situation in which a cooling capacity of the cabin air conditioning system alone would be sufficient for cooling the passenger cabin in a desired manner. This is due to the fact that an efficiency of the cabin air conditioning system may be different at different operational points associated with different levels of cooling performance. Here, it has been observed that an efficiency especially decreases if the cabin air conditioning system needs to provide a comparatively high level of cooling performance. Thus, if heat is transferred to the traction battery thermal management system, the cabin air conditioning system may be operated at a lower or comparatively low performance level. This enhances the overall efficiency of the thermal management system of an electric vehicle.

According to a sixth aspect of the present disclosure, there is provided a use of a heat exchanger forming part of a traction battery thermal management system of an electric vehicle for cooling a passenger cabin of the electric vehicle. In an example, this heat-exchanger thermally couples the traction battery thermal management system and an environment of the electric vehicle. This is especially useful in an operational situation in which the passenger cabin is to be cooled by the cabin air conditioning system, i.e. in an operational situation in which heat needs to be withdrawn from the passenger cabin. By transferring heat from the cabin air conditioning system to the traction battery thermal management system and by using the heat exchanger of the traction battery thermal management system, both the cabin air conditioning system and the traction battery thermal management system may be used conjointly or synergistically in order to perform the task of cooling the passenger cabin. In other words, the traction battery thermal management system may support the cabin air conditioning system in cooling the passenger cabin. In doing so, a cooling capacity provided by the cabin air conditioning system may be situationally enlarged by such a heat transfer and the traction battery thermal management system. This means that a cooling performance of the cabin air conditioning system may be enlarged without the need to do hardware-changes in the cabin air conditioning system. Moreover, the heat transfer from the cabin air conditioning system into the traction battery thermal management system may enhance efficiency of cooling the passenger cabin. This may even be true in a situation in which a cooling capacity of the cabin air conditioning system alone would be sufficient for cooling the passenger cabin in a desired manner. This is due to the fact that an efficiency of the cabin air conditioning system may be different at different operational points associated with different levels of cooling performance. Here, it has been observed that an efficiency especially decreases if the cabin air conditioning system needs to provide a comparatively high level of cooling performance. Thus, if heat is transferred to the traction battery thermal management system, the cabin air conditioning system may be operated at a lower or comparatively low performance level. This enhances the overall efficiency of the thermal management system of an electric vehicle.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows an electric vehicle having a thermal management system comprising a cabin air conditioning system and a traction battery thermal management system, a data processing apparatus according to the present disclosure, a computer program according to the present disclosure, and a computer-readable storage medium according to the present disclosure such that a method according to the present disclosure for controlling the thermal management system may be executed,
- Figure 2: shows the thermal management system of the vehicle of Figure 1, the data processing apparatus, the computer program and the computer-readable storage medium in a more detailed, diagrammatic view, and
- Figure 3: shows an alternative thermal management system in a view corresponding to the view of Figure 2.

The Figures are merely schematic representations and serve only to illustrate examples of the disclosure. Identical or equivalent elements are in principle provided with the same reference signs.

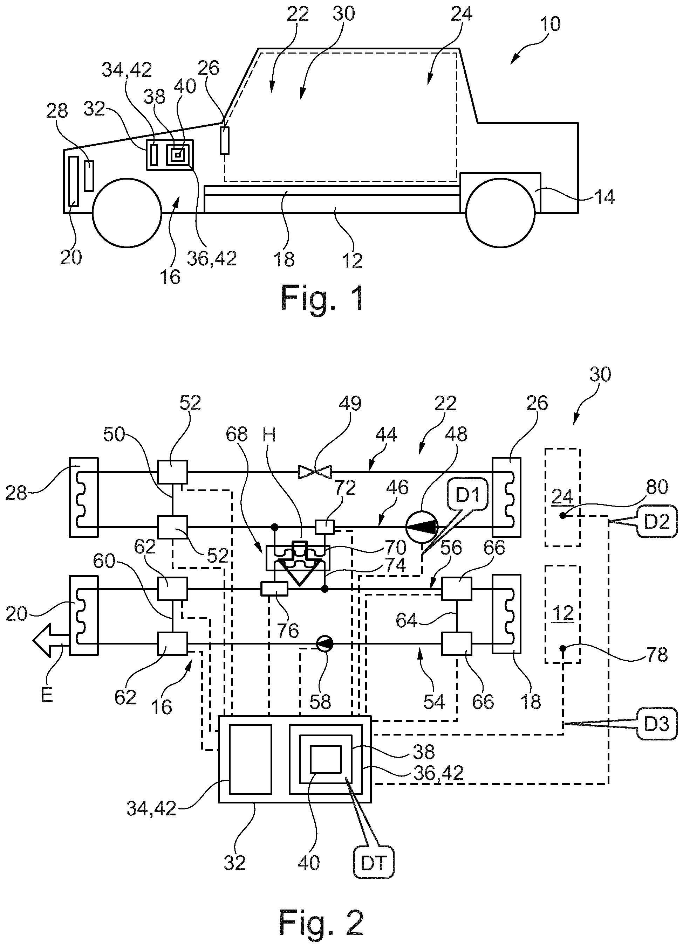

Figure 1 shows an electric vehicle 10. The electric vehicle 10 is a battery electric vehicle and, thus, comprises a traction battery 12 which is electrically connected to a traction motor unit 14 configured to drive the road wheels of the vehicle 10.

In order to control a temperature of the traction battery 12, the electric vehicle 10 comprises a traction battery thermal management system 16.

In Figure 1, the traction battery thermal management system 16 is represented by a traction battery-sided heat exchanger 18 and an environment-sided heat exchanger 20. It is understood that the traction battery-sided heat exchanger 18 and the environment-sided heat exchanger 20 are thermally coupled. This and other details of the traction battery thermal management system 16 will be provided further below.

The vehicle 10 additionally comprises a cabin air conditioning system 22 configured to control a temperature in a passenger cabin 24 of the electric vehicle 10.

In Figure 1, the cabin air conditioning system 22 is represented by a passenger cabin-sided heat exchanger 26 and an environment-sided heat exchanger 28. It is understood that the passenger cabin-sided heat exchanger 26 and the environment-sided heat exchanger 28 are thermally coupled. This and other details of the cabin air conditioning system 22 will be provided further below.

The traction battery thermal management system 16 and the cabin air conditioning system 22 together form a thermal management system 30 of the electric vehicle 10.

The thermal management system 30 also comprises a data processing apparatus 32. The data processing apparatus 32 is configured to control the remaining components of the thermal management system 30, especially the traction battery thermal management system 16 and the cabin air conditioning system 22. Consequently, the data processing apparatus 32 may be called a control unit.

The data processing apparatus 32 comprises a data processing unit 34 and a data storage unit 36.

The data storage unit 36 comprises a computer-readable storage medium 38.

On the computer-readable storage medium 38 and, thus, also on the data storage unit 36, there is provided a computer program 40.

The computer program 40 and, thus, also the computer-readable storage medium 38 comprises instructions which, when executed by the data processing unit 34 or, more generally speaking, a computer, cause the data processing unit 34 or the computer to carry out a method for controlling a thermal management system of an electric vehicle.

Consequently, the data processing unit 34 and the data storage unit 36 form means 42 for carrying out the method for controlling a thermal management system of an electric vehicle.

Figure 2 shows the thermal management system 30 of the electric vehicle 10 in more detail. For the ease of explanation, also the passenger cabin 24 and the traction battery 12 are represented in a schematic manner.

As can be seen from Figure 2, the passenger cabin-sided heat exchanger 26 of the cabin air conditioning system 22 and the environment-sided heat exchanger 28 of the cabin air conditioning system 22 are fluidically coupled using two fluidic connection lines 44, 46. The fluidic connection lines 44, 46 allow to circulate a coolant between the passenger cabin-sided heat exchanger 26 and the environment-sided heat exchanger 28. As will be seen from the following explanations, the coolant undergoes cyclic phase changes when circulating between the passenger cabin-sided heat exchanger 26 and the environment-sided heat exchanger 28. Thus, the coolant qualifies as a refrigerant.

A compressor 48 is provided in the fluidic connection line 46 in order to be able to selectively move the coolant provided in the cabin air conditioning system 22, i.e. in the fluidic connection lines 44, 46, the passenger cabin-sided heat exchanger 26, and the environment-sided heat exchanger 28.

Furthermore, an expansion valve 49 is provided in the fluidic connection line 44.

Moreover, the cabin air conditioning system 22 comprises a bypass line 50 which is fluidically coupled to the fluidic connection lines 44, 46 via two bypass valves 52. The bypass line 50 is configured to fully or partially bypass the environment-sided heat exchanger 28.

As can be further seen from Figure 2, the traction battery-sided heat exchanger 18 of the traction battery thermal management system 16 and the environment-sided heat exchanger 20 of the traction battery thermal management system 16 are fluidically coupled using two fluidic connection lines 54, 56. The fluidic connection lines 54, 56 allow to circulate a coolant between the traction battery-sided heat exchanger 18 and the environment-sided heat exchanger 20.

In the present example, the coolant circulating between the traction battery-sided heat exchanger 18 and the environment-sided heat exchanger 20 is liquid and does not change its state of aggregation.

A pump 58 is provided in the fluidic connection line 54 in order to be able to selectively move the coolant provided in the traction battery thermal management system 16, i.e. in the fluidic connection lines 54, 56, the traction battery-sided heat exchanger 18, and the environment-sided heat exchanger 20.

Moreover, the traction battery thermal management system 16 comprises a bypass line 60 which is fluidically coupled to the fluidic connection lines 54, 56 via two bypass valves 62. The bypass line 60 is configured to fully or partially bypass the environment-sided heat exchanger 20.

The traction battery thermal management system 16 comprises another bypass line 64 which is fluidically coupled to the fluidic connection lines 54, 56 via two bypass valves 66. The bypass line 64 is configured to fully or partially bypass the traction battery-sided heat exchanger 18.

In the example of Figure 2, the traction battery thermal management system 16 and the cabin air conditioning system 22 are thermally coupled using a coupling heat exchanger 68.

In order to allow for this coupling, the cabin air conditioning system 22 comprises a coolant flow path 70 which is connected to the fluidic connection line 46 via a valve 72. This coolant flow path 70 extends through the coupling heat exchanger 68 and returns to the fluidic connection line 46.

In a similar manner, the traction battery thermal management system 16 comprises a coolant flow path 74 which is connected to the fluidic connection line 56 via a valve 76. This coolant flow path 74 extends through the coupling heat exchanger 68 and returns to the fluidic connection line 56.

The thermal management system 30 may be controlled using a method for controlling a thermal management system of an electric vehicle.

In the following, this method will be explained in more detail.

In a first step S1 of this method, first data D 1 indicative of an operational condition of the cabin air conditioning system 22 is obtained.

In the example of Figure 2, the operational condition of the cabin air conditioning system 22 is described by a rotational speed of the compressor 48. Consequently, in the first step S1, data indicative of the rotational speed of the compressor 48 is received. The rotational speed is used as an indicator of the thermal load that needs to be handled by the cabin air conditioning system 22. This means that a high rotational speed of the compressor 48 is associated with a high thermal load that needs to be handled. Correspondingly, a comparatively low rotational speed of the compressor 48 is associated with a comparatively low thermal load.

In order to be able to consider the first data D1 in the method, the compressor 48 is communicatively connected to the data processing apparatus 32.

Furthermore, in a second step S2, second data D2 indicative of a temperature of the passenger cabin 24, and third data D3 indicative of a temperature of the traction battery 12 is obtained.

To this end, a temperature sensor 78 is located adjacent to the traction battery 12. This temperature sensor 78 is communicatively connected to the data processing apparatus 32. Moreover, a temperature sensor 80 is located inside the passenger cabin 24. Also this temperature sensor 80 is communicatively connected to the data processing apparatus 32.

In a subsequent third step S3, a heat transfer H from the cabin air conditioning system 22 to the traction battery thermal management system 16 is caused. However, the third step S3 is subject to two conditions.

The first condition relates to the fact that the first data D1 exceeds a first data threshold DT indicative of an operational condition limit. This means that the heat transfer H is caused only if the operational condition of the cabin air conditioning system 22 exceeds an operational condition limit. The first data threshold DT is provided on the computer-readable storage medium 38.

The second condition relates to the second data D2 and the third data D3. The heat transfer is only caused if the second data D2 and third data D3 indicate that the temperature of the traction battery 12 is lower than the temperature of the passenger cabin 24.

In the present example, the heat transfer from the cabin air conditioning system 22 to the traction battery thermal management system 16 is done by selectively causing thermal coupling of the cabin air conditioning system 22 and the traction battery thermal management system 16.

To this end, the coupling heat exchanger 68 is used.

This means that the coolant flow path 70 within the cabin air conditioning system 22 is opened by operating valve 72 accordingly.

Furthermore, coolant flow path 74 is opened by operating valve 76 accordingly.

Additionally, within the traction battery thermal management system 16, a coolant flow path is open which extends through the traction battery 12 or which is arranged adjacent to the traction battery 12. In the present example, this means that the coolant flow path extending through the traction battery-sided heat exchanger 18 is opened. Thus, the bypass line 64 is close by operating the valves 66 accordingly.

Consequently, the traction battery 12 may be used as a heat sink for the cabin air conditioning system 22 in that the heat transferred from the cabin air conditioning system 22 into the traction battery thermal management system 16 is dissipated into the traction battery 12.

According to an option of the present method, an additional heat transfer E is caused. This additional heat transfer E extends from the traction battery thermal management system 16 to an environment of the electric vehicle 10.

To this end, the environment-sided heat exchanger 20 of the traction battery thermal management system 16 is used. This means that the traction battery thermal management system 16 and the environment are selectively thermally coupled via this environment-sided heat exchanger 20. More precisely, a coolant flow path extending through this environment-sided heat exchanger 20 is selectively opened. This means that the bypass line 60 needs to be closed using the valves 62.

It is noted that even though the thermal management system 30 as shown in Figures 1 and 2 comprises an environment-sided heat exchanger 28, such a heat exchanger is optional. In case the thermal management system 30 does not comprise an environment-sided heat exchanger 28, the bypass valves 52 are not needed. In such a situation, the bypass line 50 is used as a simple return line fluidically connecting fluidic connection line 44 and fluidic connection line 46.

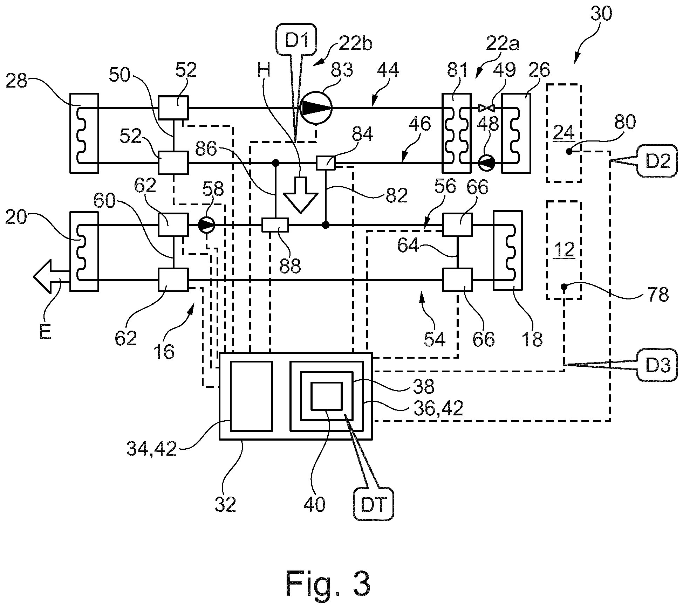

Figure 3 shows an alternative thermal management system 30. In the following, only the differences with respect to the thermal management system 30 of Figure 2 will be explained.

In the example of Figure 3, the cabin air conditioning system 22 is composed of two sub-units. In the first sub-unit 22a the coolant undergoes a phase change when cycling between the passenger cabin-sided heat exchanger 24 and a connecting heat exchanger 81. To this end, a compressor 48 and an expansion valve 49 are provided. The first sub-unit 22a essentially operates in the same manner as the cabin air conditioning system 22 of the example of Figure 2.

In the second sub-unit 22b, the coolant is liquid and does not undergo a phase change when cycling between the connecting heat exchanger 81 and the environment-sided heat exchanger 28. The connecting heat exchanger 81 and the environment-sided heat exchanger 28 are fluidically connected via fluidic connection lines 44, 46. Moreover, a pump 83 is provided in fluidic connection line 44.

Heat originating from the passenger cabin 24 may be taken up by the coolant in the first sub-unit 22a and may be transferred to the coolant of the second sub-unit 22b using connecting heat exchanger 81.

In the example of Figure 3, the cabin air conditioning system 22, more precisely the second sub-unit 22b, and the traction battery thermal management system 16 may be fluidically coupled.

To this end, a first coupling line 82 is provided. This coupling line 82 is fluidically connected to the fluidic line 46 via a first coupling valve 84.

Moreover, a second coupling line 86 is provided which is connected to the fluidic line 56 by a second coupling valve 88.

Also the thermal management system 30 of Figure 3 may be controlled using the method for controlling a thermal management system of an electric vehicle.

Also in this context, only the differences with respect to the example of Figure 2 will be explained. In the example of Figure 3, causing the heat transfer H from the cabin air conditioning system 22 to the traction battery thermal management system 16 comprises selectively causing fluidic coupling of the cabin air conditioning system 22 and the traction battery thermal management system 16.

This means that the first coupling valve 84 and the second coupling valve 88 are operated such that coolant may flow from fluidic line 46 through the first coupling line 82 into the traction battery thermal management system 16 and may recirculate from the traction battery thermal management system 16 into the cabin air conditioning system 22 via the second coupling valve 88 and the second coupling line 86.

Altogether, in both the example of Figure 2 in the example of Figure 3 a traction battery 12 of an electric vehicle 10 may be used as a heat sink for a cabin air conditioning system 22.

Furthermore, according to the option as described for the example of Figure 2 which is also valid for example of Figure 3, a heat exchanger forming part of a traction battery thermal management system 16, i.e. the environment-sided heat exchanger 20, may be used for cooling the passenger cabin 24 of the electric vehicle 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: electric vehicle
- 12: traction battery
- 14: traction motor unit
- 16: traction battery thermal management system
- 18: traction battery-sided heat exchanger of the traction battery thermal management system
- 20: environment-sided heat exchanger of the traction battery thermal management system
- 22: cabin air conditioning system
- 24: passenger cabin
- 26: passenger cabin-sided heat exchanger of the cabin air conditioning system
- 28: environment-sided heat exchanger of the cabin air conditioning system
- 30: thermal management system
- 32: data processing apparatus
- 34: data processing unit
- 36: data storage unit
- 38: computer-readable storage medium
- 40: computer program
- 42: means for carrying out the method for controlling a thermal management system of an electric vehicle
- 44: fluidic connection line
- 46: fluidic connection line
- 48: compressor
- 49: expansion valve
- 50: bypass line
- 52: bypass valve
- 54: fluidic connection line
- 56: fluidic connection line
- 58: pump
- 60: bypass line
- 62: bypass valve
- 64: bypass line
- 66: bypass valve
- 68: coupling heat exchanger
- 70: flow path
- 72: valve
- 74: flow path
- 76: valve
- 78: temperature sensor
- 80: temperature sensor
- 81: connecting heat exchanger
- 82: first coupling line
- 83: pump
- 84: first coupling valve
- 86: second coupling line
- 88: second coupling valve

- D1: first data
- D2: second data
- D3: third data
- DT: first data threshold
- E: heat transfer
- H: heat transfer
- S1: first step
- S2: second step
- S3: third step

## Claims

1. A method for controlling a thermal management system (30) of an electric vehicle (10), wherein the thermal management system (30) comprises a cabin air conditioning system (22) configured to control a temperature in a passenger cabin (24) of the electric vehicle (10), and a traction battery thermal management system (16) configured to control a temperature of a traction battery (12) of the electric vehicle (10), the method comprising:
causing a heat transfer (H) from the cabin air conditioning system (22) to the traction battery thermal management system (16) (S3).

2. The method of claim 1, wherein causing the heat transfer (H) from the cabin air conditioning system (22) to the traction battery thermal management system (16) comprises selectively causing thermal coupling of the cabin air conditioning system (22) and the traction battery thermal management system (16).

3. The method of claim 1 or 2, wherein causing the heat transfer (H) from the cabin air conditioning system (22) to the traction battery thermal management system (16) comprises
selectively causing opening of a coolant flow path (70) within the cabin air conditioning system (22) extending through a heat exchanger (68) thermally coupling the cabin air conditioning system (22) and the traction battery thermal management system (16), and/or
selectively causing opening of a coolant flow path (74) within the traction battery thermal management system (16) extending through a heat exchanger (68) thermally coupling the cabin air conditioning system (22) and the traction battery thermal management system (16).

4. The method of any one of the preceding claims, wherein causing the heat transfer (H) from the cabin air conditioning system (22) to the traction battery thermal management system (16) comprises selectively causing opening of a coolant flow path within the traction battery thermal management system (16) extending through the traction battery (12) or arranged adjacent to the traction battery (12).

5. The method of any one of the preceding claims, wherein causing the heat transfer (H) from the cabin air conditioning system (22) to the traction battery thermal management system (16) comprises selectively causing fluidic coupling of the cabin air conditioning system (22) and the traction battery thermal management system (16).

6. The method of any one of the preceding claims, further comprising obtaining first data (D 1) indicative of an operational condition of the cabin air conditioning system (22) (S1) and
causing the heat transfer (H) from the cabin air conditioning system (22) to the traction battery thermal management system (16) if the first data (D1) exceeds a first data threshold indicative of an operational condition limit.

7. The method of any one of the preceding claims, further comprising obtaining second data (D2) indicative of a temperature of the passenger cabin (24), obtaining third data (D3) indicative of a temperature of the traction battery (12) (S2), and
causing the heat transfer (H) from the cabin air conditioning system (22) to the traction battery thermal management system (16) if the second data (D2) and the third data (D3) indicate that the temperature of the traction battery (12) is lower than the temperature of the passenger cabin (24).

8. The method of any one of the preceding claims, further comprising causing a heat transfer (E) from the traction battery thermal management system (16) to an environment of the electric vehicle (10).

9. The method of claim 8, wherein causing the heat transfer (E) from the traction battery thermal management system (16) to the environment comprises selectively causing thermal coupling of the traction battery thermal management system (16) and the environment.

10. The method of claim 8 or 9, wherein causing the heat transfer (E) from the traction battery thermal management system (16) to the environment comprises selectively causing opening of a coolant flow path within the traction battery thermal management system (16) extending through a heat exchanger (20) thermally coupling the traction battery thermal management system (16) and the environment.

11. A data processing apparatus (32) comprising means (42) for carrying out the method of any one of the preceding claims.

12. A computer program (40) comprising instructions which, when the computer program (40) is executed by a computer, cause the computer to carry out the method of claims 1 to 10.

13. A computer-readable storage medium (38) comprising instructions which, when executed by a computer, cause the computer to carry out the method of claims 1 to 10.

14. A use of a traction battery (12) of an electric vehicle (10) as a heat sink for a cabin air conditioning system (22).

15. A use of a heat exchanger (20) forming part of a traction battery thermal management system (16) of an electric vehicle (10) for cooling a passenger cabin (24) of the electric vehicle (10).

## Amended claims

### Amended claims in accordance with Rule 137(2) EPC.

1. A method for controlling a thermal management system (30) of an electric vehicle (10), wherein the thermal management system (30) comprises a cabin air conditioning system (22) configured to control a temperature in a passenger cabin (24) of the electric vehicle (10), and a traction battery thermal management system (16) configured to control a temperature of a traction battery (12) of the electric vehicle (10), the method comprising:
obtaining first data (D1) indicative of an operational condition of the cabin air conditioning system (22) (S1) and
causing a heat transfer (H) from the cabin air conditioning system (22) to the traction battery thermal management system (16) (S3), if the first data (D1) exceeds a first data threshold indicative of an operational condition limit.

2. The method of claim 1, wherein causing the heat transfer (H) from the cabin air conditioning system (22) to the traction battery thermal management system (16) comprises selectively causing thermal coupling of the cabin air conditioning system (22) and the traction battery thermal management system (16).

3. The method of claim 1 or 2, wherein causing the heat transfer (H) from the cabin air conditioning system (22) to the traction battery thermal management system (16) comprises
selectively causing opening of a coolant flow path (70) within the cabin air conditioning system (22) extending through a heat exchanger (68) thermally coupling the cabin air conditioning system (22) and the traction battery thermal management system (16), and/or
selectively causing opening of a coolant flow path (74) within the traction battery thermal management system (16) extending through a heat exchanger (68) thermally coupling the cabin air conditioning system (22) and the traction battery thermal management system (16).

4. The method of any one of the preceding claims, wherein causing the heat transfer (H) from the cabin air conditioning system (22) to the traction battery thermal management system (16) comprises selectively causing opening of a coolant flow path within the traction battery thermal management system (16) extending through the traction battery (12) or arranged adjacent to the traction battery (12).

5. The method of any one of the preceding claims, wherein causing the heat transfer (H) from the cabin air conditioning system (22) to the traction battery thermal management system (16) comprises selectively causing fluidic coupling of the cabin air conditioning system (22) and the traction battery thermal management system (16).

6. The method of any one of the preceding claims, further comprising
obtaining second data (D2) indicative of a temperature of the passenger cabin (24), obtaining third data (D3) indicative of a temperature of the traction battery (12) (S2), and
causing the heat transfer (H) from the cabin air conditioning system (22) to the traction battery thermal management system (16) if the second data (D2) and the third data (D3) indicate that the temperature of the traction battery (12) is lower than the temperature of the passenger cabin (24).

7. The method of any one of the preceding claims, further comprising
causing a heat transfer (E) from the traction battery thermal management system (16) to an environment of the electric vehicle (10).

8. The method of claim 7, wherein causing the heat transfer (E) from the traction battery thermal management system (16) to the environment comprises selectively causing thermal coupling of the traction battery thermal management system (16) and the environment.

9. The method of claim 7 or 8, wherein causing the heat transfer (E) from the traction battery thermal management system (16) to the environment comprises selectively causing opening of a coolant flow path within the traction battery thermal management system (16) extending through a heat exchanger (20) thermally coupling the traction battery thermal management system (16) and the environment.

10. A data processing apparatus (32) comprising means (42) for carrying out the method of any one of the preceding claims.

11. A computer program (40) comprising instructions which, when the computer program (40) is executed by a computer, cause the computer to carry out the method of claims 1 to 9.

12. A computer-readable storage medium (38) comprising instructions which, when executed by a computer, cause the computer to carry out the method of claims 1 to 9.

13. A use of a traction battery (12) of an electric vehicle (10) as a heat sink for a cabin air conditioning system (22) if first data (D1) indicative of an operational condition of the cabin air conditioning system (22) exceeds a first data threshold indicative of an operational condition limit.
